# EUROPÄISCHE PATENTSCHRIFT

(11) **EP 1 396 186 B1**
(45) Veröffentlichungstag und Bekanntmachung des Hinweises auf die Patenterteilung: **25.10.2006**
(21) Anmeldenummer: 03018527.6
(22) Anmeldetag: 16.08.2003
(51) Int. Cl.: A01D 75/00, B60R 9/02

(54) **Schneidwerkswagen**
Cutting tool carrier
Chariot d'outil de coupe

(30) Priorität: 03.09.2002 DE 10240513
(43) Veröffentlichungstag der Anmeldung: 10.03.2004
(73) Patentinhaber: CLAAS Selbstfahrende Erntemaschinen GmbH, 33428 Harsewinkel (DE)
(72) Erfinder: Wernsmann, Thomas, Dipl.-Ing., 33428 Harsewinkel (DE); Sunderkemper-G., Christian, 33442 Herzebrock-Clarholz (DE); Bussmann, Ralf, 48336 Sassenberg (DE)

(56) Entgegenhaltungen:
- DE-A- 4 439 077
- DE-A- 19 931 281
- FR-A- 2 781 188

## Beschreibung

Die Erfindung betrifft einen Transportwagen mit einer im wesentlichen aus zwei mit Abstand zueinander an dem Zentralprofil des Wagens angeordneten Tragarmpaaren gebildeten Aufnahme für das Schneidwerk eines Mähdreschers, wobei der Aufnahme eine weitere Ablage zugeordnet ist.

Ein derartiger Schneidwerkswagen ist beispielsweise durch die DE 199 31 281 A1 bekannt. Dabei ist mit den Tragarmpaaren eine kippartige Platte verbunden, auf der ein Schneidwerk abgelegt werden kann. In einer ersten Ausführungsform ist diese Platte so groß ausgebildet, dass sie neben dem eigentlichen Schneidwerk auch noch ein Vorsatzschneidwerk aufnehmen kann, wie es beispielsweise für die Rapsernte eingesetzt wird. In einem zweiten Ausführungsbeispiel ist der Auflageplatte für das Schneidwerk eine zusätzliche Platte zugeordnet, die ebenfalls zum großen Teil von den Tragarmpaaren gehalten wird. In beiden Fällen dienen die zusätzlichen Fläche einzig und allein zur Aufnahme eines Vorsatzschneidwerkes. Es ist nicht möglich, auf dieser Zusatzplattform beispielsweise Halmteiler oder Ersatzmesser zu lagern und mitzuführen, weil diese völlig ungesichert und allen Witterungseinflüssen ausgesetzt sind.

Der vorliegenden Erfindung liegt daher gemäß dem Patentanspruch 1 das Problem zugrunde, eine weitere Ablage zu schaffen, mit welcher auch unterschiedliche Zusatzeinrichtungen und Ersatzteile problemlos mitgeführt werden können.

Ausgehend von einem Transportwagen der eingangs näher bezeichneten Art wird diese Aufgabe dadurch gelöst, dass die weitere Ablage als Behälter ausgebildet ist. Auf diese Weise ist es möglich, unterschiedliche Teile sicher mitzuführen, ohne dass diese Teile während des Transportes verloren gehen. Sie können allenfalls im Behältnis verrutschen.

Um zu verhindern, dass die mitgeführten Teile gestohlen werden, während der Transportwagen am Ackerrand abgestellt ist, empfiehlt es sich, das Behältnis verschließbar auszubilden. Zweckmäßigerweise sollte das Behältnis allseits geschlossen sein, damit die mitgeführten Teile einerseits gegen Diebstahl und andererseits zusätzlich noch gegen Witterungsbedingungen geschützt sind. Ein Teil des Behältnisses ist dabei als verschließbarer Deckel ausgebildet, so dass ein leichter Zugang zu den Teilen gewährleistet ist.

Um zu verhindern, dass insbesondere dann, wenn kleinere Teile mitgeführt werden, diese während des Transportes zu sehr im Behältnis hin- und herrutschen, ist im Rahmen der Erfindung vorgesehen, das Behältnis mit Aufnahmeeinbauten auszustatten. Diese Aufnahmeeinbauten sind dann so gestaltet, dass durch sie eine fixierte Lage der mitzuführenden Teile im Behältnis gewährleistet ist.

Nach einem weiteren Merkmal der Erfindung sind die Aufnahmeeinbauten austauschbar und in ihrer Ausgestaltung den mitzuführenden Gegenständen angepasst.

Ein wesentliches Merkmal der Erfindung ist auch darin zu sehen, dass das Behältnis leicht abnehmbar mit dem Transportwagen verbunden ist. Auf konstruktiv einfache Art und Weise ruht es dabei auf mindestens zwei Haltern auf. Hierdurch ist einerseits eine einwandfreie Zugänglichkeit bei Reparaturarbeiten gewährleistet, andererseits können Behältnisse völlig unterschiedlicher Ausgestaltung eingesetzt werden.

Es empfiehlt sich, die Halter selbst unmittelbar am Zentraltragprofil des Transportwagens zu befestigen, wobei die Halter im Abstandsraum zwischen den beiden Tragarmpaaren angeordnet sind.

Nach einem weiteren Merkmal der Erfindung ist das Behältnis an einer einen Tragarm eines Tragarmpaares mit einem Arm des anderen Tragarmpaares verbindenden Traverse lagefixiert.

Im folgenden soll die Erfindung anhand eines Ausführungsbeispiels und mehrerer Figuren näher erläutert werden. Dabei zeigt:
- Fig. 1: Einen Transportwagen mit Schneidwerk in der Seitenansicht
- Fig. 2: Den in Fig. 1 dargestellten Transportwagen mit zusätzlichem Behältnis aber ohne Schneidwerk
- Fig. 3: Eine Darstellung gemäß der Schnittlinie III-III aus Fig. 1
- Fig. 4: Den in Transportrichtung hinteren Teil des Schneidwerkwagens nach Fig. 2 in perspektivischer Darstellung.

Mit 1 ist ein Transportwagen bezeichnet, der ein Zentraltragprofil 2 aufweist, welches über ein Knotenblech 3 mit der Achse 4 fest verbunden ist. Die Achse 4 stützt sich über Laufräder 5 am Boden ab.

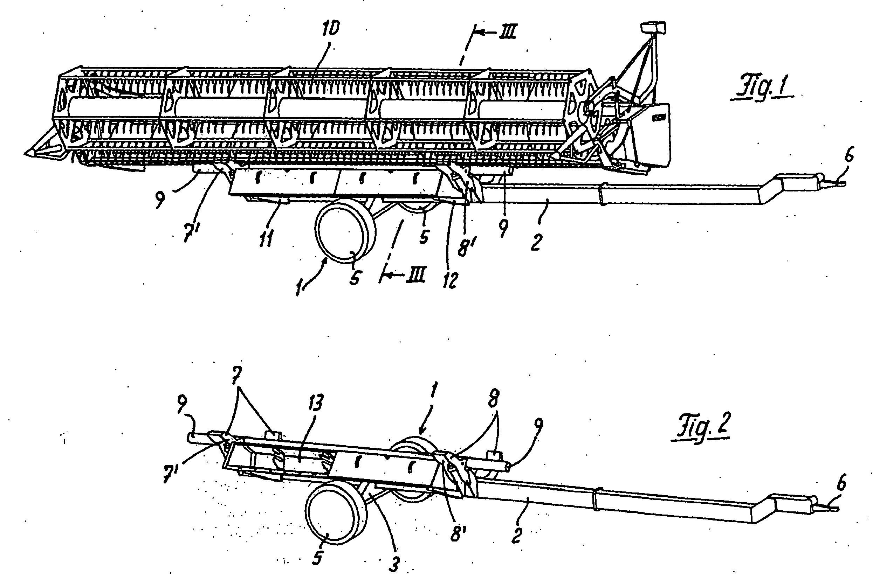

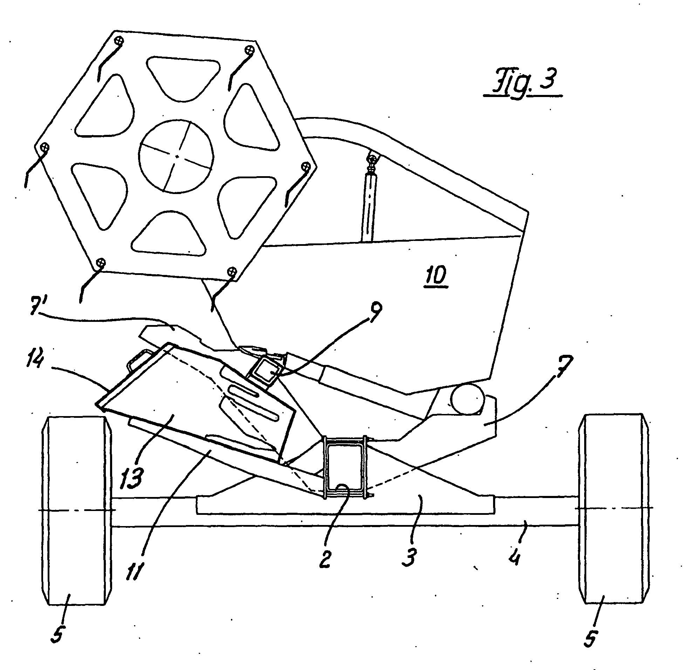

Wie die Fig. 2 zeigt, weist das Zentraltragprofil an seinem in Transportrichtung vorderen Ende eine Anhängevorrichtung 6 auf. Beidseits der Achse 4 ist mit dem Zentraltragprofil 2 jeweils ein Tragarmpaar 7. bzw. 8 verbunden, wobei die gemäß Fig. 1 dem Betrachter zugewandten Tragarme 7' und 8' über eine Traverse 9 miteinander zusätzlich verbunden sind. Sowohl aus der Fig. 1 als auch aus der Fig. 3 ist zu erkennen, dass auf den beiden Tragarmpaaren 7 und 8 sowie auf der Traverse 9 das Schneidwerk 10 eines Mähdreschers aufruht. Im Abstandsraum zwischen den Tragarmen 7' und 8' sind zusätzliche Stützarme 11 und 12 vorgesehen, die ebenso wie die Tragarme 7,8 fest mit dem Zentraltragprofil 2 verbunden sind. Auf diesen Stützarme 11 und 12 ruht ein Behälter 13, welcher auf nicht näher dargestellte Art und Weise an der Traverse 9, den Tragarmen 7',8' und den Stützarmen 11,12 lagerfixiert ist. Um die in dem Behälter 13 mitzuführenden Gegenstände sowohl gegen Witterungseinflüsse als auch gegen Diebstahl zu schützen, kann der Behälter 13 durch mindestens einen Deckel 14 geschlossen werden, wobei der Deckel 14 beispielsweise mittels eines Vorhängeschlosses gesichert ist.

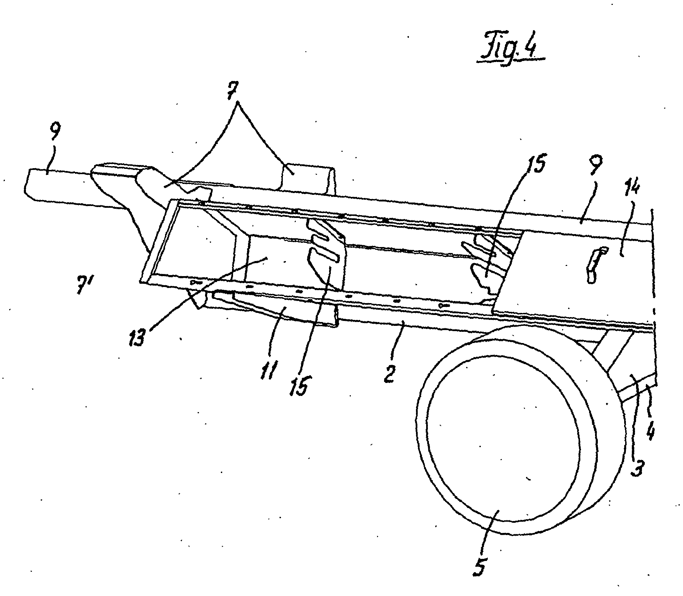

Wie insbesondere die Figur 4 deutlich erkennen lässt, sind im inneren des Behälters 13 Aufnahmeeinbauten 15 vorgesehen, die entsprechend den mitzuführenden Gegenständen ausgestaltet sind und diesen einen sicheren Halt bieten. Die Aufnahmeeinbauten 15 können gegen andere, eine andere Profilierung aufweisende Einbauten ausgetauscht werden. Ebenso wie die Aufnahmeeinbauten 15 kann auch der gesamte Behälter 13 nach Lösen seiner Fixierung an der Traverse 9 und den Stützarmen 11,12 sowie den Tragarmen 7'8' herausgenommen und beispielsweise durch ein anderes Behältnis ersetzt werden.

### BEZUGSZEICHENAUFSTELLUNG

- 1: Transportwagen
- 2: Zentraltragprofil
- 3: Knotenblech
- 4: Achse
- 5: Laufräder
- 6: Anhängevorrichtung
- 7, 7': Tragarmpaar
- 8, 8': Tragarmpaar
- 9: Traverse
- 10: Schneidwerk
- 11: Stützarme
- 12: Stützarme
- 13: Behälter
- 14: Deckel
- 15: Aufnahmeeinbauten

## Patentansprüche

1. Transportwagen (1) mit einer im wesentlichen aus zwei mit Abstand zueinander an dem Zentraltragprofil (2) des Wagens (1) angeordneten Tragarmpaaren (7, 7', 8, 8') gebildeten Aufnahme für das Schneidwerk (10) eines Mähdreschers, wobei der Aufnahme eine weitere Ablage zugeordnet ist,
**dadurch gekennzeichnet,**
**dass** die weitere Ablage als Behälter (13) ausgebildet ist und wobei Stützarme (11, 12) am Zentraltragprofil (2) fest befestigt sind und der Behälter (13) untenseitig von den Stützarmen (11, 12) getragen wird und sich in einem Bereich zwischen den Tragarmpaaren (7, 7', 8, 8') und dem Zentraltragprofil (2) erstreckt.

2. Transportwagen nach Anspruch 1,
**dadurch gekennzeichnet,**
**dass** der Behälter (13) verschließbar ist.

3. Transportwagen nach den Ansprüchen 1 und 2,
**dadurch gekennzeichnet,**
**dass** der Behälter (13) allseits geschlossen ist.

4. Transportwagen nach den Ansprüchen 1 bis 3,
**dadurch gekennzeichnet,**
**dass** der Behälter (13) mit einem Deckel (14) verschließbar ist.

5. Transportwagen nach den Ansprüchen 1 bis 4,
**dadurch gekennzeichnet,**
**dass** der Behälter (14) Aufnahmeeinbauten (15) aufweist.

6. Transportwagen nach Anspruch 5,
**dadurch gekennzeichnet,**
**dass** die Aufnahmeeinbauten (15) austauschbar sind.

7. Transportwagen nach Anspruch 1,
**dadurch gekennzeichnet,**
**dass** die Halter (11 und 12) unmittelbar am Zentraltragprofil (2) des Transportwagens (1) befestigt sind.

8. Transportwagen nach den Ansprüchen 1 bis 6,
**dadurch gekennzeichnet,**
**dass** die Halter (11 und 12) im Abstandsraum zwischen den beiden Tragarmpaaren (7 und8) am Zentraltragprofil befestigt sind.

9. Transportwagen nach einem oder mehreren der vorstehenden Ansprüche,
**dadurch gekennzeichnet,**
**dass** der Behälter (13) an einer einen Arm (7') eines Tragarmpaares (7) mit einem Arm (8') des anderen Tragarmpaares (8) verbindenden Traverse (9) lagefixiert ist.

## Claims

1. A transport wagon (1) comprising a receiving means for the cutting mechanism (10) of a combine harvester, the receiving means being formed substantially from two pairs of carrier arms (7,7',8,8') arranged at a spacing relative to each other on the central carrier profile member (2) of the wagon (1), wherein a further storage means is associated with the receiving means,
**characterised in that**
the further storage means is in the form of a container (13) and wherein support arms (11,12) are fixed rigidly to the central carrier profile member (2) and the container (13) is carried at the underside by the support arms (11,12) and extends in a region between the pairs of carrier arms (7,7',8,8') and the central carrier profile member (2).

2. A transport wagon according to claim 1 **characterised in that** the container (13) is closable.

3. A transport wagon according to claims 1 and 2 **characterised in that** the container (13) is closed on all sides.

4. A transport wagon according to claims 1 to 3 **characterised in that** the container (13) is closable with a cover (14).

5. A transport wagon according to claims 1 to 4 **characterised in that** the container (13) has receiving fitments (15) therein.

6. A transport wagon according to claim 5 **characterised in that** the receiving fitments (15) are interchangeable.

7. A transport wagon according to claim 1 **characterised in that** the holders (11 and 12) are fixed directly to the central carrier profile member (2) of the transport wagon (1).

8. A transport wagon according to claims 1 to 6 **characterised in that** the holders (11 and 12) are fixed in the space between the two pairs of carrier arms (7 and 8) to the central carder profile member.

9. A transport wagon according to one or more of the preceding claims **characterised in that** the container (13) is fixed in position to a transverse portion (9) connecting one arm (7') of a pair of carrier arms (7) to an arm 8' of the other pair of carrier arms (8).

## Revendications

1. Chariot de transport (1) comportant un berceau pour l'outil de coupe (10) d'une moissonneuse-batteuse, qui est formé essentiellement de deux paires de bras-supports (7,7',8,8') disposées à distance l'une de l'autre sur le profilé porteur central (2) du chariot (1), un moyen de rangement supplémentaire étant associé au berceau, **caractérisé par le fait que** le moyen de rangement supplémentaire est agencé sous la forme d'un conteneur (13), des consoles (11,12) étant solide fixées au profilé central (2), le conteneur (13) étant supporté par le dessous par les consoles (11,12) et s'étendant dans une zone comprise entre les paires de bras-supports (7,7',8,8') et le profilé porteur central (2).

2. Chariot de transport selon la revendication 1, **caractérisé par le fait que** le conteneur (13) peut être fermé.

3. Chariot de transport selon les revendications 1 et 2, **caractérisé par le fait que** le conteneur (13) est fermé sur tous les côtés.

4. Chariot de transport selon les revendications 1 à 3, **caractérisé par le fait que** le conteneur (13) peut être fermé au moyen d'un couvercle (14).

5. Chariot de transport selon les revendications 1 à 4, **caractérisé par le fait que** le conteneur (13) contient des aménagements de support (15).

6. Chariot de transport selon la revendication 5, **caractérisé par le fait que** les aménagements de support (15) sont interchangeables.

7. Chariot de transport selon les revendications 1 à 6, **caractérisé par le fait que** les consoles (11 et 12) sont fixées au profilé porteur central dans l'intervalle entre les deux paires de bras-supports (7 et 8).

8. Chariot de transport selon une ou plusieurs des revendications précédentes, **caractérisé par le fait que** le conteneur (13) est fixé à une traverse (9) qui relie un bras (7') de l'une des paires de bras-supports (7) à un bras (8') de l'autre paire de bras-supports (8).

9. Chariot de transport selon les revendications 7 et 9, **caractérisé par le fait que** les consoles (11 et 12) sont fixées directement au profilé porteur central (2) du chariot de transport (1)
